# EUROPÄISCHE PATENTSCHRIFT

(11) **EP 0 795 185 B1**
(45) Veröffentlichungstag und Bekanntmachung des Hinweises auf die Patenterteilung: **04.11.1998**
(21) Anmeldenummer: 95939213.5
(22) Anmeldetag: 30.11.1995
(51) Int. Cl.: H01H 21/34, F16H 59/10

(54) **DREHSCHALTER, INSBESONDERE GETRIEBESCHALTER FÜR KRAFTFAHRZEUGE**
ROTARY SELECTOR, IN PARTICULAR GEAR SHIFTING SELECTOR FOR MOTOR VEHICLES
SELECTEUR ROTATIF, NOTAMMENT SELECTEUR DE CHANGEMENT DE VITESSE POUR VEHICULES A MOTEUR

(30) Priorität: 02.12.1994 DE 4442865
(43) Veröffentlichungstag der Anmeldung: 17.09.1997
(73) Patentinhaber: EATON CONTROLS GmbH & Co. KG, 55445 Langenlonsheim (DE)
(72) Erfinder: RECH, Dietmar, D-55430 Oberwesel (DE)
(74) Vertreter: Becker, Bernd, Dipl.-Ing.
(86) Internationale Anmeldenummer: DE9501691
(87) Internationale Veröffentlichungsnummer: WO9617365

(56) Entgegenhaltungen:
- EP-A- 0 614 205
- DE-B- 1 194 034
- US-A- 4 603 240

## Beschreibung

Die Erfindung bezieht sich auf einen Drehschalter, insbesondere Getriebeschalter für Kraftfahrzeuge, mit einem Anschraubelemente aufweisenden Gehäuse, in dem ein eine Verstellwelle aufnehmendes Drehschaltglied gelagert und in einer Drehstellung fixierbar ist.

Ein derartiger Drehschalter ist bereits bekannt. Nach der Montage und Endprüfung ist dieser in seiner Neutralposition eingestellt und mittels eines Justagebügels fixiert. Dies ist der Auslieferungszustand, mit dem der Drehschalter am Montageort des Kraftfahrzeuges angeliefert wird. In der Neutralposition des Getriebes und der Neutralposition des Drehschalters erfolgt die Montage der Teile zueinander, wobei ein Toleranzausgleich über die Anschraubelemente durchgeführt wird, die mit einem ausreichenden Justagespiel ausgestattet sind. Nach dem Befestigen des Drehschalters wird der Justagebügel von diesem entfernt. Wenn es im Servicefall notwendig ist, daß entweder das Getriebe oder der Drehschalter demontiert werden muß , so ist in jedem Falle ein Hilfsmittel erforderlich, um den Drehschalter in der Neutralposition zu fixieren. Da der Justagebügel bei der Schaltermontage im Herstellerwerk des Kraftfahrzeuges entfernt wurde, steht er in der Kraftfahrzeug-Werkstatt nicht mehr zur Verfügung. Um den Drehschalter in der Neutralposition zu fixieren, wird somit ein Hilfsmittel hergestellt oder ein Ersatzjustagebügel bestellt. Die Herstellung eines Hilfsmittels ist arbeitsaufwendig, und die Bestellung eines Justagebügels im Kraftfahrzeugwerk ist zeitaufwendig.

Aus der US-A-4 603 240 ist ein Drehschalter bekannt, bei dem ein Drehschaltglied mit Hilfe eines einfachen Stiftes, der durch diese Öffnungen geschoben werden muß, in einer bestimmten Darstellung fixiert wird.

Der Erfindung liegt die Aufgabe zugrunde, einen Drehschalter der eingangs genannten Art zu schaffen, bei dem stets ein Justageelement für die Fixierung des Drehschalters in seiner Neutralposition unmittelbar zur Verfügung steht, wobei das Justageelement zudem preiswert in der Herstellung ist und einen geringen Platzbedarf erfordert.

Diese Aufgabe wird erfindungsgemäß dadurch gelöst, daß ein unverlierbar am Gehäuse befestigter, verschiebbarer Riegel das Drehschaltglied mittels eines in eine Nut des Drehschaltgliedes eingreifenden Riegelstiftes in einer bestimmten Drehstellung fixiert.

Durch diese Maßnahme steht das als Riegel ausgebildete Justageelement immer zur Verfügung. Da die die Fixierung des Drehschalters bewirkenden Bauteile alle am Drehschalter vorhanden sind, wird weiterhin die Fixierung des Drehschalters in der Neutralposition mit einer hohen Genauigkeit gewährleistet.

Nach einer vorteilhaften Ausgestaltung der Erfindung trägt der Riegel eine Federraste, mittels der der Riegel in einer Entriegelungsstellung oder in einer Verriegelungsstellung gehalten wird. Hierdurch verbleibt der Riegel stets in der gewünschten eingestellten Stellung. Ein selbsttätiges Verstellen von der Entriegelungsstellung in die Verriegelungsstellung, z. B. bei der Fahrt des Kraftfahrzeuges, ist somit ausgeschlossen.

Zur Erreichung einer definierten Lage des Riegels drückt nach einer Weiterbildung der Erfindung die Federraste den Riegel in der Entriegelungsstellung und der Verriegelungsstellung gegen gehäusefeste Anschläge. Zweckmäßigerweise ist der gehäusefeste Anschlag für die Verriegelungsstellung durch einen eine Bohrung zur Aufnahme des Drehschaltgliedes aufweisenden, umlaufenden Ring gebildet, und der gehäusefeste Anschlag für die Entriegelungsstellung besteht aus einem auf die Gehäusewand aufgesetzten Schiebestopp. Dadurch sind keine weiteren Einzelteile erforderlich. Die die Funktion bewerkstelligenden Elemente sind an den bereits vorhandenen Teilen angeformt.

Nach einer vorteilhaften Weiterbildung der Erfindung ist der Riegel durch eine gehäusefeste Führung unverlierbar am Gehäuse gehaltert. Die Halterungselemente sind somit in die Führungselemente integriert, was kostengünstig ist. Ein einfacher Aufbau der Führung wird erreicht, wenn ein erster Teil der Führung aus einem Ausschnitt im umlaufenden Ring gebildet ist, in dem der Riegelstift einliegt, ein zweiter Teil der Führung aus gegenüberliegenden Anschlägen am Schiebestopp besteht, zwischen denen der Riegel gleitet, und ein dritter Teil der Führung zwei gegenüberliegende, den Riegel übergreifende Führungswinkel umfaßt, durch die der Riegel nicht vom Gehäuse abheben kann.

Weiterhin greift bevorzugt in die vom umlaufenden Ring umgebene Bohrung im Gehäuse ein Wulst des Drehschaltgliedes ein, der die Nut aufweist, in die der Riegelstift des Riegels eintaucht. Durch diese Maßnahme liegt das Führungselement des Drehschaltgliedes an dem Führungselement des Riegels an, wodurch die Passungsabstimmung einfach durchzuführen ist. Die Nut, in die der Riegelstift eintaucht, liegt auf einem relativ großen Durchmesser, wodurch eine bessere Justiertoleranz erreicht wird.

Durch eine flächige Ausgestaltung von Spritzteilen können die Werkzeugkosten zur Herstellung der Spritzteile gering gehalten werden. Daher ist nach einer weiteren Ausgestaltung an dem im Querschnitt rechteckförmig ausgebildeten Riegel in Richtung der Drehachse des Drehschaltgliedes der Riegelstift angeformt, und das der Drehachse abgewandte, dem Schiebestopp zugewandte Ende des Riegels ist zwischen den gegenüberliegenden Anschlägen angeordnet, wobei der Mittenbereich des Riegels über eine Ausnehmung die Federraste darstellt. Bei dieser Ausgestaltung kann in die flächige Ausführung des Riegels sehr einfach eine Federung integriert werden. Zweckmäßigerweise wird dies dadurch erreicht, daß die Federraste des Riegels aus mindestens einer seitlichen, im Querschnitt des Riegels eingebetteten Federspange besteht, die in Richtung zu einem gehäusefesten Raststeg eine Rastkulisse trägt. Da die Federspange in der Längsausdehnung des Riegels untergebracht ist, ist eine Anpassung an die erforderliche Federkraft sehr leicht durchführbar. Eine ausreichende und genau dosierbare Federkraft läßt sich nach einer weiteren vorteilhaften Ausgestaltung erreichen, wenn in den Querschnitt des Riegels zwei gegenüberliegende, Rastkulissen aufweisende Federspangen eingeformt sind, wobei die Rastkulissen zwischen sich innerhalb der Ausnehmung den Raststeg aufnehmen. Somit nimmt der Riegel stets eine definierte Stellung ein, da er in beiden Endstellungen zwischen dem Raststeg, der Rastkulisse und den gehäusefesten Anschlägen eingespannt ist.

Um den Riegel leicht handhaben zu können, ist bevorzugt an dem Riegel ein Schiebegriff angeformt, und/oder zwischen dem Schiebestopp und dem der Drehachse des Schaltgliedes abgewandten Ende des Riegels ist ein Hebelloch vorgesehen. Mittels des Schiebegriffes läßt sich der Riegel hin- und herbewegen. In das Hebelloch kann ein Werkzeug, z. B. ein Schraubendreher, eingesetzt werden, um den Riegel aus seiner Entriegelungsstellung in die Verriegelungsstellung zu bringen. Dies kann dann erforderlich sein, wenn die Rastkulissen an den Federspangen so ausgebildet sind, daß für die Verriegelungssellung eine erhöhte Verschiebekraft erforderlich ist.

Ferner weisen zweckmäßigerweise die Anschraubelemente des Gehäuses ein die Justierung des Drehschalters ermöglichendes Justagespiel auf. Sonach können die Fertigungstoleranzen an der Drehschalterhalterung leicht ausgeglichen werden. Eine preisgünstige Herstellung, bei der optimal auf die Reibkräfte der zusammenwirkenden Teile Einfluß genommen werden kann, wird erreicht, wenn der Riegel und die mit dem Riegel zusammenwirkenden Bauteile aus Kunststoff bestehen.

In der nachfolgenden Beschreibung wird zunächst anhand der Fig. 1 und 2 der vorbekannte Drehschalter und anschließend anhand der Fig. 3 bis 6 ein Ausführungsbeispiel des erfindungsgemäßen Drehschalters näher beschrieben. Es zeigt:

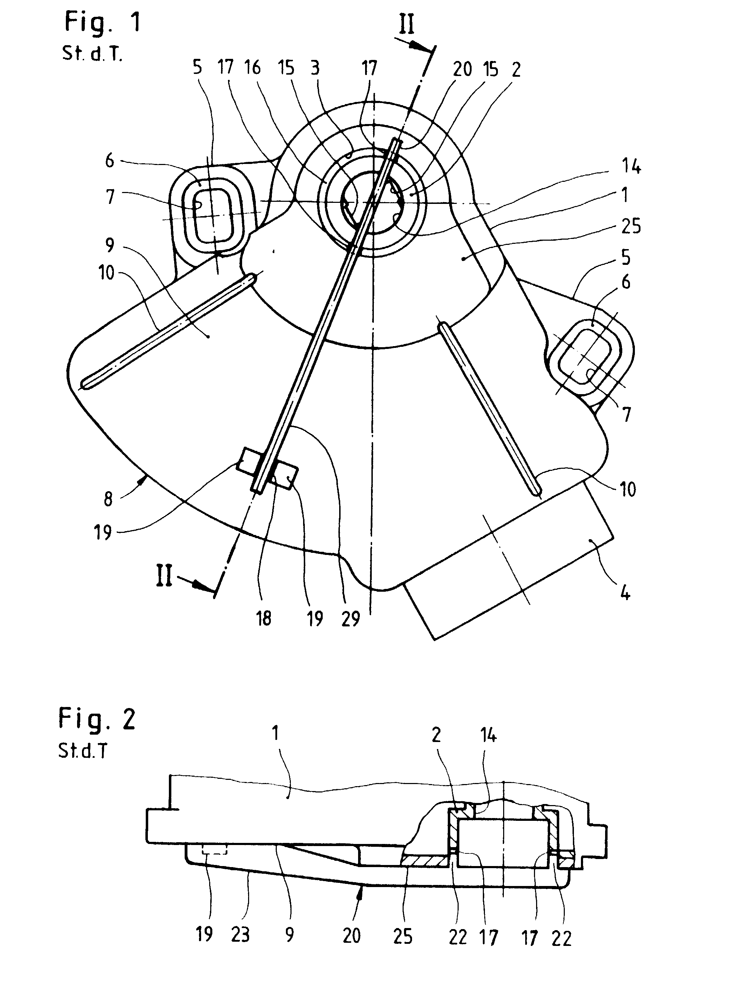

- Fig. 1: eine Draufsicht auf einen bekannten Drehschalter mit aufgesetztem Justagebügel,
- Fig. 2: eine Seitenansicht des Drehschalters nach Fig. 1 mit einem Teilschnitt entlang der Linie II-II,

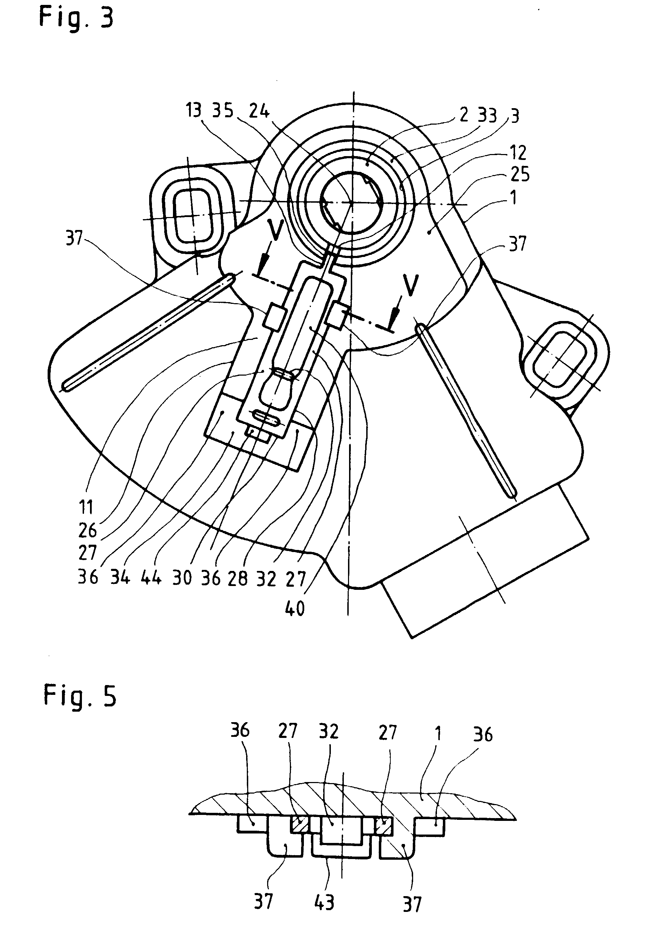

- Fig. 3: eine Draufsicht auf einen Drehschalter nach der Erfindung im entriegelten Zustand,
- Fig. 4: eine Draufsicht auf den Drehschalter nach Fig. 3 im verriegelten Zustand,
- Fig. 5: einen Teilschnitt durch den Drehschalter nach Fig. 3 entlang der Linie V-V und

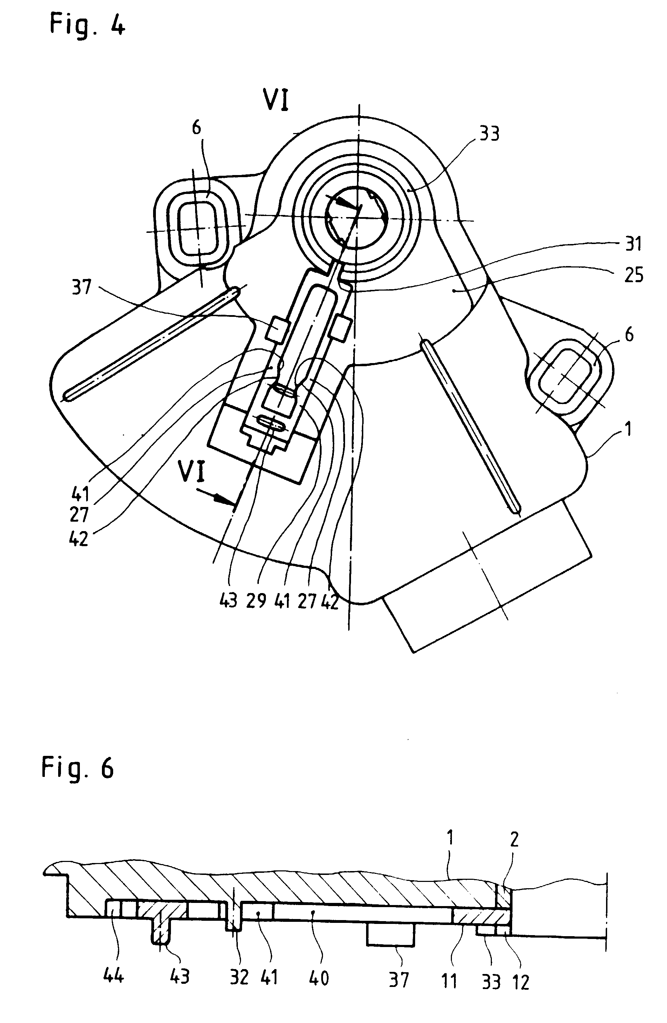

- Fig. 6: einen Teilschnitt durch den Drehschalter nach Fig. 4 entlang der Linie VI-VI.

In den Fig. 1 und 2 ist ein Drehschalter nach dem Stand der Technik dargestellt, dessen Gehäuse 1 in einer Bohrung 3 ein Drehschaltglied 2 aufnimmt. Mit einem nicht dargestellten Deckel wird das Gehäuse 1 verschlossen und das Drehschaltglied 2 axial festgelegt. Das Drehschaltglied 2 kann somit lediglich im Gehäuse 1 drehend verschwenkt werden und zwar soweit dies der freie Schwenkbereich im Gehäuse 1 zuläßt. Innerhalb eines Steckerkragens 4 befinden sich nicht dargestellte Anschlußelemente über die die Strompfade aus dem Drehschalter herausgeführt werden. In am Gehäuse 1 angeordnete Befestigungsflansche 5 sind Anschraubelemente 6 eingesetzt. Die Anschraubeelemente 6 sind im wesentlichen rechteckförmig und weisen in ihrem Inneren eine rechteckförmige Anschraubbohrung 7 auf. Das Gehäuse 1 besitzt einen sektorförmigen Schaltraum 8, in dem der nicht dargestellte Schaltarm des Drehschaltgliedes 2 hin- und herschwenkt. In dem Schaltarm sind die Kontaktelemente zur Verbindung bzw. zur Unterbrechung der erforderlichen Strompfade untergebracht. Zur Versteifung des Gehäuses 1 sind auf der Oberseite 9 Rippen 10 angebracht. Eine Aufnahmebohrung 14 des Drehschaltgliedes 2 trägt Einstecklaschen 15 für eine nicht dargestellte Verstellwelle. Ein Umlaufring 16 des Drehschaltgliedes 2 liegt oberflächengleich zum Gehäuse 1 vor. In den Umlaufring 16 sind diametral gegenüberliegend Einstecknuten 17 eingelassen. Auf der Oberseite 9 des Gehäuses 1 befindet sich ein Justageschlitz 18, der zwischen zwei gegenüberliegenden Höckern 19 gebildet ist. Ein Justagebügel 20 befindet sich auf der Oberfläche des Drehschalters. In dem der Bohrung 3 zugewandten Bereich ist der Justagebügel 20 mit Justagelaschen 22 versehen, die in die Einstecknuten 17 im Umlaufring 16 des Drehschaltgliedes 2 eingreifen. Mit seinem Oberflächenarm 23 greift der Justagebügel 20 in den an der Oberseite 9 des Gehäuses 1 vorhandenen Justageschlitz 18 ein und justiert somit den Drehschalter in seiner Neutralposition.

Die Fig. 3 bis 6 veranschaulichen den erfindungsgemäßen Drehschalter. Soweit die gleichen Bauteile wie beim bekannten Drehschalter vorhanden sind, werden die gleichen Bezeichnungen und die gleichen Bezugsnummern benutzt.

Die Aufnahmebohrung 14 des Drehschaltgliedes 2 besitzt Einstecklaschen 15 für die nicht dargestellte Verstellwelle. Das Drehschaltglied 2 ist in einer Bohrung 3 im Gehäuse 1 drehbar um die Achse 24 gelagert. Die Achse 24 liegt koaxial zum Gehäuse 1 und zum Drehschaltglied 2 vor. Verschiebbar und Unverlierbar ist am Gehäuse 1 ein Riegel 11 befestigt. Dazu weist die Wand 25, in der sich die Bohrung 3 für die Aufnahme des Drehschaltgliedes 2 befindet, einen Ansatz 26 auf, um eine größere ebene Auflagefläche für den Riegel 11 zu erhalten. Das Drehschaltglied 2 weist eine Nut 12 auf, in die ein Riegelstift 13 des Riegels 11 eingreift, der das Drehschaltglied 2 in einer Drehstellung fixiert. Mittels zweier Federraste 27 wird der Riegel 11 entweder in seiner Entriegelungsstellung 28 oder in seiner Verriegelungsstellung 29 gehalten. Die Federrasten 27 befinden sich an den beiden Längsseiten des Riegels 11 und wirken mit einem gehäusefesten Raststeg 32 zusammen. Das Zusammenwirken der Federrasten 27 mit dem Riegelstift 32 ist so gestaltet, daß der Riegel 11 in seiner Entriegelungsstellung 28 gegen einen gehäusefesten Anschlag 30 und in seiner Verriegelungsstellung gegen einen gehäusefesten Anschlag 31 gedrückt wird. Die das Drehschaltglied 2 aufnehmende Bohrung 3 des Gehäuses 1 ist von einem umlaufenden Ring 3 umgeben. Der Außendurchmesser des umlaufenden Ringes 33 bildet den gehäusefesten Anschlag 31 für den Riegel 11 in der Verriegelungsstellung 29. Auf der Gehäusewand 25 befindet sich ein Schiebestopp 34, der den gehäusefesten Anschlag 30 für den Riegel 11 in der Entriegelungsstellung 28 darstellt.

Durch eine gehäusefeste Führung ist der Riegel 11 unverlierbar am Gehäuse 1 gehaltert. Ein erster Teil der Führung besteht aus einem Ausschnitt 35 im umlaufenden Ring 33, in dem der Riegelstift 13 des Riegels 11 einliegt. Am Schiebestopp 34 sind gegenüberliegende Anschläge 36 befestigt, die einen zweiten Teil der Führung darstellen. Zwischen den gegenüberliegenden Anschlägen 36 gleitet der Riegel 11 mit geringem Spiel hin und her. Ein dritter Teil der Führung besteht aus zwei gegenüberliegenden, den Riegel 11 übergreifenden Führungswinkeln 37. Dabei sind die Führungswinkel 37 gering versetzt, jedoch noch gegenüberliegend an die Gehäusewand 25 angeformt. Die Führungswinkel 37 übergreifen den Riegel 11 und verhindern, daß dieser sich vom Gehäuse 1 abheben kann.

Das Drehschaltglied 2 besitzt einen kreisförmigen Wulst 38, der in die Bohrung 3 eintaucht und einen oberflächengleichen Abschluß mit dem umlaufenden Ring 33 des Gehäuses 1 bildet. Der Wulst 38 weist die Nut 12 auf, in die in der Verriegelungsstellung 29 der Riegelstift 13 des Riegels 11 eingreift und das Drehschaltglied 2 fixiert. Somit liegen in der Verriegelungsstellung 29 der Ausschnitt 35 und die Nut 12 dekkungsgleich gegenüber, und der Riegelstift 13 des Riegels 11 befindet sich in beiden Bauteilen und blockiert das Verdrehen des Drehschaltgliedes 2 im Gehäuse 1.

Der Riegel 11 ist im Querschnitt rechteckig ausgebildet und liegt mit einer Flachseite auf der Gehäusewand 25 des Gehäuses 1 auf. Der Riegelstift 13 ist in Richtung der Drehachse 24 des Drehschaltgliedes 2 am Riegel 11 angeformt. Das der Drehachse 24 abgewandte Ende des Riegels 11 weist in Richtung des Schiebestopps 34 und liegt zwischen den gegenüberliegenden Anschlägen 36. Der Riegel 11 ist somit seitlich festgelegt und kann daher nur in Richtung der Drehachse 24 bzw. von der Drehachse weg bewegt werden. Eine Ausnehmung 40 befindet sich im Mittenbereich des Riegels 11. Die Umrandung der Ausnehmung 40, welche an den Schmalseiten des Riegels 11 noch vorhanden ist, bildet hierbei die Federrasten 27. Die Federrasten 27 des Riegels 11 werden also aus den zwei seitlich zu der Ausnehmung 40 verbliebenen Querschnitten des Riegels 11 gebildet. Jeder Einzelquerschnitt stellt eine Federspange 39 dar, die in Richtung zur Ausnehmung 40 eine Rastkulisse 41 trägt. Die Rastkulissen 41 wirken mit einem an der Gehäusewand 25 angeformten Raststeg 32 zusammen. Die Feder-spangen 39 befinden sich also gegenüberliegend im Querschnitt des Riegels 11, und deren Rastkulissen 41 weisen im Bereich der Ausnehmung 40 aufeinander zu. Der Raststeg 32 ragt in der Ausnehmung 40 auf und ist breiter als der lichte Bereich zwischen den Spitzen 42 der Rastkulissen 41. Beim Verschieben des Riegels 11 in die Verriegelungsstellung 29 bzw. die Entriegelungsstellung 28 gleiten die an den Federspangen 39 angeordneten Rastkulissen 41 auf dem Raststeg 32 entlang. Dabei wölben sich die Federspangen 39 elastisch nach außen, und nach dem Überschreiten der Spitzen 42 der Rastkulissen 41 gleitet der Riegel 11 selbsttätig in die neue Stellung 28 bzw. 29. Somit liegt also immer eine definierte Stellung für den Riegel 11 vor.

Um den Riegel 11 von Hand betätigen zu können, trägt dieser auf seiner der Gehäusewand 25 abgewandten Seite einen Schiebegriff 43. Weiterhin ist zwischen dem Schiebestopp 34 und dem der Drehachse 24 des Schaltgliedes 2 abgewandten Ende des Riegels 11 ein Hebelloch 44 vorgesehen, das bis auf die Höhe der Gehäusewand 25 reicht. Mit einem Schraubendreher, der in das Hebelloch 44 eingesetzt und gedreht wird, kann somit der Riegel 11 in seine Verriegelungsstellung 29 geschoben werden.

In Bezug auf die Neutralstellung des Getriebes muß auch der Drehschalter in der Neutralstellung am Fahrzeug befestigt wer-den. Dazu besitzen die als rechteckige Hülsen ausgebildeten Anschraubelemente 6 je eine rechteckige Einschraubbohrung 7. Zwischen einem in die Anschraubbohrung 7 eingreifenden Stift ist dadurch genügend Spiel für die Justage des Drehschalters am Kraftfahrzeug vorhanden. Die Anschraubelemenet 6 sind aus Metall hergestellt und zeigen somit nicht das bei Kunststoff unter Dauerlast auftretende Setzverhalten. Die Anschraubelemente 6 besitzen somit ein ausreichendes Justagespiel und die Anzugsdrehmomente werden sicher aufgenommen. Moderne Kunststoffe weisen ausreichende Dauerelastizität auf. Auch sind die Oberflächen so herstellbar, daß die Reibkräfte die Funktion nicht beeinträchtigen. Daher sind der Riegel 11 und die mit dem Riegel 11 zusammenwirkenden Bauteile, wie die Führung, die Gehäusewand 25 usw, aus Kunststoff hergestellt.

## Patentansprüche

1. Drehschalter, insbesondere Getriebeschalter für Kraftfahrzeuge, mit einem Anschraubelemente aufweisenden Gehäuse, in dem ein eine Verstellwelle aufnehmendes Drehschaltglied gelagert und in einer Drehstellung fixierbar ist, dadurch gekennzeichnet, daß ein unverlierbar am Gehäuse (1) befestigter, verschiebbarer Riegel (11) das Drehschaltglied (2) mittels eines in eine Nut (12) des Drehschaltgliedes (2) eingreifenden Riegelstiftes (13) in einer bestimmten Drehstellung fixiert.

2. Drehschalter nach Anspruch 1, dadurch gekennzeichnet, daß der Riegel (11) eine Federraste (27) trägt, mittels der der Riegel (11) in einer Entriegelungsstellung (28) oder in einer Verriegelungsstellung (29) gehalten wird.

3. Drehschalter nach Anspruch 2, dadurch gekennzeichnet, daß die Federraste (27) den Riegel (11) in der Entriegelungsstellung (28) und der Verriegelungsstellung (29) gegen gehäusefeste Anschläge (30, 31) drückt.

4. Drehschalter nach Anspruch 3, dadurch gekennzeichnet, daß der gehäusefeste Anschlag (31) für die Verriegelungsstellung (29) durch einen eine Bohrung (3) zur Aufnahme des Drehschaltgliedes (2) aufweisenden, umlaufenden Ring (33) gebildet ist, und der gehäusefeste Anschlag (30) für die Entriegelungsstellung (28) aus einem auf die Gehäusewand (25) aufgesetzten Schiebestopp (34) besteht.

5. Drehschalter nach einem der Ansprüche 1 bis 4, dadurch gekennzeichnet, daß der Riegel (11) durch eine gehäusefeste Führung unverlierbar am Gehäuse (1) gehaltert ist.

6. Drehschalter nach einem der Ansprüche 1 bis 5, dadurch gekennzeichnet, daß ein erster Teil der Führung aus einem Ausschnitt (35) im umlaufenden Ring (33) gebildet ist, in dem der Riegelstift (13) einliegt, ein zweiter Teil der Führung aus gegenüberliegenden Anschlägen (36) am Schiebestopp (34) besteht, zwischen denen der Riegel (11) gleitet und ein dritter Teil der Führung zwei gegenüberliegende, den Riegel (11) übergreifende Führungswinkel (37) umfaßt, durch die der Riegel (11) nicht vom Gehäuse (1) abheben kann.

7. Drehschalter nach einem der Ansprüche 1 bis 6, dadurch gekennzeichnet, daß in die vom umlaufenden Ring (33) umgebene Bohrung (3) im Gehäuse (1) ein Wulst (38) des Drehschaltgliedes (2) eingreift, der die Nut (12) aufweist, in die der Riegelstift (13) des Riegels (11) eintaucht.

8. Drehschalter nach einem der Ansprüche 1 bis 7, dadurch gekennzeichnet, daß an dem im Querschnitt rechteckförmig ausgebildeten Riegel (11) in Richtung der Drehachse (24) des Drehschaltgliedes (2) der Riegelstift (13) angeformt ist, und das der Drehachse (24) abgewandte, dem Schiebestopp (34) zugewandte Ende des Riegels (11) zwischen den gegenüberliegenden Anschlägen (36) angeordnet ist, wobei der Mittenbereich des Riegels (11) durch eine Ausnehmung (40) die Federraste (27) darstellt.

9. Drehschalter nach einem der Ansprüche 1 bis 8, dadurch gekennzeichnet, daß die Federraste (27) des Riegels (11) aus mindestens einer seitlichen, im Querschnitt des Riegels (11) eingebetteten Federspange (39) besteht, die in Richtung zu einem gehäusefesten Raststeg (32) eine Rastkulisse (41) trägt.

10. Drehschalter nach einem der Ansprüche 1 bis 9, dadurch gekennzeichnet, daß in dem Querschnitt des Riegels (11) zwei gegenüberliegende, Rastkulissen (41) aufweisende Feder-spangen (39) eingeformt sind, wobei die Rastkulissen (41) zwischen sich innerhalb der Ausnehmung (40) den Raststeg (32) aufnehmen.

11. Drehschalter nach einem der Ansprüche 1 bis 10, dadurch gekennzeichnet, daß an dem Riegel (11) ein Schiebegriff (43) angeformt ist, und/oder zwischen dem Schiebestopp (34) und dem der Drehachse (24) des Schaltgliedes (2) abgewandten Ende des Riegels (11) ein Hebelloch (44) vorgesehen ist.

12. Drehschalter nach einem der Ansprüche 1 bis 11, dadurch gekennzeichnet, daß die Anschraubelemente (6) des Gehäuses (1) ein die Justierung des Drehschalters ermöglichendes Justagespiel aufweisen, und die Anzugsdrehmomente zuverlässig übertragen.

13. Drehschalter nach einem der Ansprüche 1 bis 12, dadurch gekennzeichnet, daß der Riegel (11) und die mit dem Riegel (11) zusammenwirkenden Bauteile aus Kunststoff bestehen.

## Claims

1. Rotary switch, more especially a transmission switch for automotive vehicles, having a housing which includes screw-on portions, and in which a rotary switching member is mounted, which member accommodates an adjustment shaft and is securable in said housing in a rotary position, characterised in that a displaceable bar (11), which is non-detachably fastened on the housing (1), secures the rotary switching member (2) in a predetermined rotary position by means of a locking pin (13), which engages in a groove (12) in the rotary switching member (2).

2. Rotary switch according to claim 1, characterised in that the bar (11) supports a spring detent (27), by means of which the bar (11) is kept in an unlocked position (28) or in a locked position (29).

3. Rotary switch according to claim 2, characterised in that the spring detent (27) presses the bar (11) against stop members (30, 31), which are integral with the housing, in tne unlocked position (28) and in the locked position (29).

4. Rotary switch according to claim 3, characterised in that the stop member (31) for the locked position (29), which is integral with the housing, is formed hy an encircling ring (33), which has a bore (3) for accommodating the rotary switching member (2), and the stop member (30) for the unlocked position (28), which is integral with the housing, comprises a slidable stop (34), which is placed upon the housing wall (25).

5. Rotary switch according to one of claims 1 to 4, characterised in that the bar (11) is non-detachably mounted on the housing (1) by a guide means which is integral with the housing.

6. Rotary switch according to one of claims 1 to 5, characterised in that a first part of the guide means is formed from a cutaway portion (35) in the encircling ring (33), in which the locking pin (31) lies; a second part of the guide means comprises stop members (36) which are situated opposite each other on the slidable stop (34), the bar (11) sliding between said stop members; and a third part of the guide means includes two oppositely situated angular guides (37), which overlap the bar (11), and by means of which the bar (11) cannot lift from the housing (1).

7. Rotary switch according to one of claims 1 to 6, characterised in that a bead (38) of the rotary switching member (2) engages in the bore (3) in the housing (1) which is surrounded by the encircling ring (33), and said bead has the groove (12), into which the locking pin (13) of the bar (11) extends.

8. Rotary switch according to one of claims 1 to 7, characterised in that the locking pin (13) is moulded on the bar (11), which has a rectangular cross-section, in the direction of the axis of rotation (14) of the rotary switching member (2), and the end of the bar (11) remote from the axis of rotation (24) and facing the slidable stop (34) is disposed between the oppositely situated stop members (36), the central region of the bar (11) through a recess (40) constituting the spring detent (27).

9. Rotary switch according to one of claims 1 to 8, characterised in that the spring detent (27) of the bar (11) comprises at least one lateral spring clasp (39), which is embedded in the cross-section of the lock (11) and supports a locking slide (41) in the direction of a locking rib (32) integral with the housing.

10. Rotary switch according to one of claims 1 to 9, characterised in that two oppositely situated spring clasps (39) are moulded in the cross-section of the bar (11) and have locking slides (41), the locking slides (41) accommodating the locking rib (32) therebetween internally of the recess (40).

11. Rotary switch according to one of claims 1 to 10, characterised in that a slidable handle (43) is moulded on the bar (11), and/or a lever hole (44) is provided between the slidable stop (34) and the end of the bar (11) remote from the axis of rotation (24) of the switching member (2).

12. Rotary switch according to one of claims 1 to 11, characterised in that the screw-on portions (6) of the housing (1) have an adjustment clearance which permits the rotary switch to be adjusted, and they reliably transmit the tightening torques.

13. Rotary switch according to one of claims 1 to 12, characterised in that the bar (11) and the component parts which co-operate with the bar (11) are formed from plastics material.

## Revendications

1. Sélecteur rotatif, en particulier sélecteur de changement de vitesse pour véhicules automobiles, avec un boîtier comportant des éléments à visser, dans lequel un organe de sélection tournant recevant un arbre de réglage est monté et peut être fixé dans une position de rotation, caractérisé en ce qu'un verrou (11) coulissant, fixé imperdable sur le boîtier (1), fixe l'organe de commande tournant (2) au moyen d'une tige de verrou (13) s'engageant dans une rainure (12) de l'organe de commande tournant (2), dans une position de rotation déterminée.

2. Sélecteur rotatif selon la revendication 1, caractérisé en ce que le verrou (11) porte un arrêt élastique (27), au moyen duquel le verrou (11) peut être maintenu dans une position de déverrouillage (28) ou dans une position de verrouillage (29).

3. Sélecteur rotatif selon la revendication 2, caractérisé en ce que l'arrêt élastique (27) presse le verrou (11) dans la position de déverrouillage (28) et dans la position de verrouillage (29) contre des butées (30, 31) solidaires du boîtier.

4. Sélecteur rotatif selon la revendication 3, caractérisé en ce que la butée (31) solidaire du boîtier pour la position de verrouillage (29) est formée par un anneau périphérique (33), présentant un alésage (3) destiné à recevoir l'organe de commande tournant (2), et la butée (30) solidaire du boîtier pour la position de déverrouillage (28) est constituée par un arrêt de coulisseau (34) placé sur la paroi (25) du boîtier.

5. Sélecteur rotatif selon l'une des revendications 1 à 4, caractérisé en ce que le verrou (11) est maintenu imperdable sur le boîtier (1), par un guidage solidaire du boîtier.

6. Sélecteur rotatif selon l'une des revendications 1 à 5, caractérisé en ce qu'une première partie du guidage est formée par une découpe (35) de l'anneau périphérique (33) dans laquelle se trouve la tige de verrou (13), une deuxième partie du guidage est constituée de butées opposées l'une à l'autre (36) sur l'arrêt de coulisseau (34) entre lesquelles glisse le verrou (11), et une troisième partie du guidage comprend deux cornières de guidage opposées l'une à l'autre (37), enjambant le verrou (11), grâce auxquelles le verrou (11) ne peut pas se détacher du boîtier (1).

7. Sélecteur rotatif selon l'une des revendications 1 à 6, caractérisé en ce que dans l'alésage (3), entouré par l'anneau périphérique (33) dans le boîtier (1), s'engage un bourrelet (38) de l'organe de sélection tournant (2) qui présente la rainure (12) dans laquelle pénètre la tige (13) du verrou (11).

8. Sélecteur rotatif selon l'une des revendications 1 à 7, caractérisé en ce que la tige de verrou (13) est formée sur le verrou (11) de section transversale rectangulaire en direction de l'axe de rotation (24) de l'organe de sélection tournant, et l'extrémité du verrou (11), située à l'opposé de l'axe de rotation (24), orientée vers l'arrêt de coulisseau (34), est disposée entre les butées opposées l'une à l'autre (36), la zone centrale du verrou (11) présentant l'arrêt élastique (27) par un évidement (40).

9. Sélecteur rotatif selon l'une des revendications 1 à 8, caractérisé en ce que l'arrêt élastique (27) du verrou (11) est constitué d'au moins une boucle élastique latérale (39), noyée dans la section transversale du verrou (11), qui porte une coulisse d'encliquetage (41) en direction d'une traverse d'encliquetage (32) solidaire du boîtier.

10. Sélecteur rotatif selon l'une des revendications 1 à 9, caractérisé en ce que dans la section transversale du verrou (11) sont formées deux boucles élastiques (39) présentant des coulisses d'encliquetage (41), opposées l'une à l'autre dans la section transversale du verrou (11), les coulisses d'encliquetage (41) recevant entre elles la traverse d'encliquetage (32) à l'intérieur de l'évidement (40).

11. Sélecteur rotatif selon l'une des revendications 1 à 10, caractérisé en ce que sur le verrou (11) est formée une poignée coulissante (43), et/ou entre l'arrêt de coulisseau (34) et l'extrémité du verrou (11) située à l'opposé de l'axe de rotation (24) de l'organe de sélection (2) est prévu un trou de levier (44).

12. Sélecteur rotatif selon l'une des revendications 1 à 11, caractérisé en ce que les éléments à visser (6) du boîtier (1) présentent un jeu d'ajustage permettant l'ajustage du sélecteur rotatif, et transmettent fiablement les couples de rotation de serrage.

13. Sélecteur rotatif selon l'une des revendications 1 à 12, caractérisé en ce que le verrou (11) et les composants coopérant avec le verrou (11) sont en matière plastique.
